(19) Europäisches Patentamt
European Patent Office
Office européen des brevets

(11) EP 4 704 169 A1

(12) **EUROPEAN PATENT APPLICATION**
published in accordance with Art. 153(4) EPC

(43) Date of publication:
**04.03.2026 Bulletin 2026/10**

(21) Application number: **24796740.9**

(22) Date of filing: **04.04.2024**

(51) International Patent Classification (IPC):
***H01M 4/131*** *(2010.01)* ***H01M 4/36*** *(2006.01)*
***H01M 4/505*** *(2010.01)* ***H01M 4/525*** *(2010.01)*
***H01M 4/62*** *(2006.01)*

(52) Cooperative Patent Classification (CPC):
Y02E 60/10

(86) International application number:
**PCT/JP2024/013954**

(87) International publication number:
**WO 2024/224982 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.04.2023 JP 2023074238**

(71) Applicant: **Panasonic Intellectual Property Management Co., Ltd.**
**Kadoma-shi, Osaka 571-0057 (JP)**

(72) Inventors:
- **SASSA Hironari**
  **Kadoma-shi, Osaka 571-0057 (JP)**
- **KAWAKITA Akihiro**
  **Kadoma-shi, Osaka 571-0057 (JP)**
- **INOUE Katsuya**
  **Kadoma-shi, Osaka 571-0057 (JP)**
- **OGASAWARA Takeshi**
  **Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE FOR NONAQUEOUS ELECTROLYTE SECONDARY BATTERIES, AND NONAQUEOUS ELECTROLYTE SECONDARY BATTERY**

(57) A positive electrode (11) for nonaqueous electrolyte secondary batteries according to the present disclosure is characterized by having a positive electrode core body and a positive electrode mixture layer formed on the surface of the positive electrode core body, and is characterized in that: the positive electrode mixture layer contains a positive electrode active material and an additive; the positive electrode active material contains a lithium-containing transition metal composite oxide having a layered structure; the lithium-containing transition metal composite oxide is composed of secondary particles formed by aggregation of primary particles; a sulfonic acid compound represented by formula (I) is present on the surfaces of the secondary particles; and the additive includes a compound containing at least one element selected from the group consisting of P, Ca, Sr, B, Zr, Er, Ti, and Al. (In the formula, A represents a group 1 element or a group 2 element, R represents a hydrocarbon group, and n is 1 or 2.)

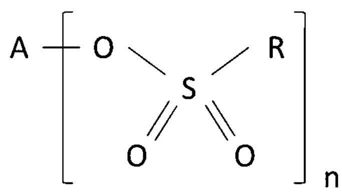

(I)

EP 4 704 169 A1

Figure 1

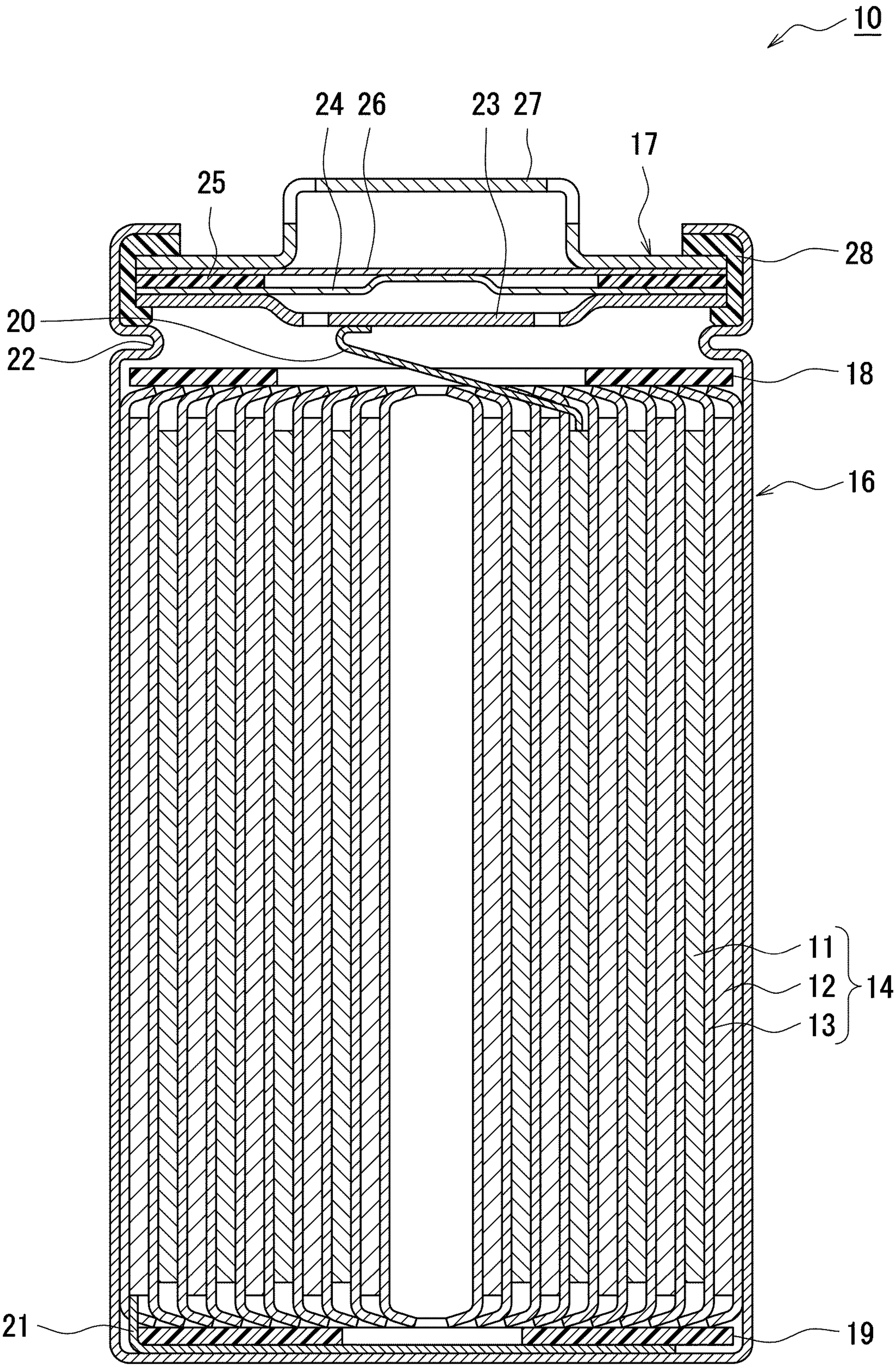

## Description

### TECHNICAL FIELD

The present disclosure relates to a positive electrode for a non-aqueous electrolyte secondary battery and a non-aqueous electrolyte secondary battery.

### BACKGROUND ART

In recent years, applications of non-aqueous electrolyte secondary batteries have expanded to power sources for electric vehicles and power storage devices for utilizing renewable natural energy. Since a positive electrode significantly affects battery characteristics, such as battery capacity, output characteristics, and cycle characteristics, the positive electrode has been the subject of extensive investigation. For example, Patent Literature 1 discloses a positive electrode for a non-aqueous electrolyte secondary battery using, as a positive electrode active material, a lithium-containing transition metal composite oxide in which a compound including an element such as zirconium (Zr), titanium (Ti), or aluminum (Al) is present at a particle interface for the purpose of improving cycle characteristics. Patent Literature 2 discloses a positive electrode for a non-aqueous electrolyte secondary battery using a lithium-containing transition metal composite oxide with Li salts with low solubility scattered on the surface as a positive electrode active material for the purpose of decreasing the reaction resistance when stored at high temperatures.

### CITATION LIST

### PATENT LITERATURE

PATENT LITERATURE 1: Japanese Unexamined Patent Application Publication No. 2022-113728
PATENT LITERATURE 2: Japanese Unexamined Patent Application Publication No. 2019-169286

### SUMMARY

In recent years, lithium-containing transition metal composite oxides with high Ni content have attracted attention as positive electrode active materials that enable higher battery capacity. However, when such lithium-containing transition metal composite oxides with high Ni content are used as positive electrode active materials, a large amount of highly reactive $Ni^{4+}$ is present on the particle surfaces of the composite oxides under high states of charge (SOC), which tends to cause side reactions between the lithium-containing transition metal composite oxides and the electrolyte. Then, hydrogen fluoride generated by side reactions reacts with the lithium-containing transition metal composite oxide, and the reaction product is deposited on the surface of the lithium-containing transition metal composite oxide, or the transition metal is eluted from the lithium-containing transition metal composite oxide. As a result, the reaction resistance of the battery increases, which in turn reduces the charge-discharge cycle characteristics.

A positive electrode for a non-aqueous electrolyte secondary battery in one aspect of the present disclosure has: a positive electrode core and a positive electrode mixture layer formed on a surface of the positive electrode core, wherein the positive electrode mixture layer includes a positive electrode active material and an additive; the positive electrode active material includes a lithium-containing transition metal composite oxide having a layered structure; the lithium-containing transition metal composite oxide is represented by the general formula $Li_xNi_aCo_bMn_cM_dO_{2-y}$, wherein $0.8 < x < 1.2$, $0.75 \leq a \leq 0.95$, $0 \leq b \leq 0.15$, $0 \leq c \leq 0.25$, $0 \leq d \leq 0.10$, $0 \leq y < 0.05$, $a + b + c + d = 1$, and M represents at least one element selected from the group consisting of W, Mg, Mo, Nb, Ti, Si, Al, and Zr, and is composed of secondary particles each formed by aggregation of primary particles; a sulfonate compound represented by formula (I) is present on surfaces of the secondary particles; and the additive includes a compound including at least one element selected from the group consisting of P, Ca, Sr, B, Zr, Er, Ti, and Al,

[Formula 1]

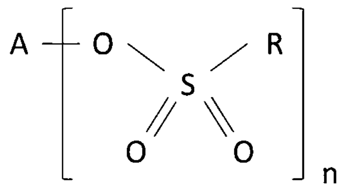

(I)

wherein A represents a group I or group II element, R represents a hydrocarbon group, and n represents 1 or 2.

A non-aqueous electrolyte secondary battery in one aspect of the present disclosure comprises the positive electrode, a negative electrode, and a non-aqueous electrolyte.

According to the positive electrode for a non-aqueous electrolyte secondary battery in one aspect of the present disclosure, a non-aqueous electrolyte secondary battery having improved cycle characteristics while reducing the reaction resistance of the battery can be provided.

BRIEF DESCRIPTION OF DRAWING

FIG. 1 is a longitudinal sectional view of a non-aqueous electrolyte secondary battery as an example of an embodiment.

DESCRIPTION OF EMBODIMENTS

As described above, the lithium-containing transition metal composite oxide with a high Ni content is prone to side reactions with the electrolyte, especially in a high SOC state. Therefore, when the composite oxide is used as a positive electrode active material, hydrogen fluoride generated by side reactions reacts with the lithium-containing transition metal composite oxide, and the reaction product is deposited on the surface of the lithium-containing transition metal composite oxide, or the transition metal is eluted from the lithium-containing transition metal composite oxide. As a result, the reaction resistance of the battery increases.

As a result of investigations by the present inventors, it has been revealed that the reaction resistance of the battery can be reduced by allowing the sulfonate compound represented by formula (I) above to be present on the surfaces of the secondary particles of the lithium-containing transition metal composite oxide used as the positive electrode active material. This is probably because the reaction resistance in the positive electrode is reduced by the function of the sulfonate compound. However, the presence of the sulfonate compound have caused a new problem of a decrease in cycle characteristics at high voltage, which is presumed to be caused by an increase in the amount of hydrogen fluoride generated by a side reaction between the lithium-containing transition metal composite oxide and the electrolyte during repeated charge and discharge due to the increased reactivity at the positive electrode in addition to the increased potential at the positive electrode.

As a result of further intensive studies, the present inventors have found that when a compound including at least one element selected from the group consisting of P, Ca, Sr, B, Zr, Er, Ti, and Al is present as an additive in a positive electrode mixture layer constituting a positive electrode, the cycle characteristics are improved while the reaction resistance of the battery is reduced, presumably because the lithium-containing transition metal composite oxide can be protected from hydrogen fluoride by allowing the hydrogen fluoride generated by the side reaction to preferentially react with the additive while reducing the reaction resistance in the positive electrode by the sulfonate compound.

Hereinafter, one aspect of an embodiment of the non-aqueous electrolyte secondary battery according to the present disclosure will be described in detail with reference to the drawings. Note that the scope of the present disclosure includes a configuration composed of selective combination of constituents of a plurality of embodiments and modified examples described below. In the present specification, the expression "greater than or equal to xx and less than or equal to yy" refers to a range including the upper limit xx and the lower limit yy.

Hereinafter, a cylindrical battery including a wound electrode assembly 14 accommodated in a bottomed cylindrical outer case 16 will be illustrated as the non-aqueous electrolyte secondary battery, but the outer case of the battery is not limited to a cylindrical outer case. The non-aqueous electrolyte secondary battery according to the present disclosure may be, for example, a rectangular battery comprising a rectangular outer case, a coin-type battery comprising a coin-type outer case, or a pouch battery comprising an outer case constituted by a laminated sheet including a metal layer and a resin layer. The electrode assembly is not limited to the wound-type, and may be a laminate electrode assembly in which a plurality of positive electrodes and a plurality of negative electrodes are alternately stacked one by one via separators. In addition, the design of the non-aqueous electrolyte secondary battery according to the present disclosure is not limited to the design of the illustrated non-aqueous electrolyte secondary battery, and a known non-aqueous

electrolyte secondary battery design may be applied.

FIG. 1 is an axial sectional view of a cylindrical non-aqueous electrolyte secondary battery 10 as an example of an embodiment. As shown in FIG. 1, the non-aqueous electrolyte secondary battery 10 comprises a wound electrode assembly 14, a non-aqueous electrolyte, and an outer case 16 that houses the electrode assembly 14 and the non-aqueous electrolyte. The electrode assembly 14 includes a positive electrode 11, a negative electrode 12, and a separator 13 and has the positive electrode 11 and the negative electrode 12 being wound with the separator 13. The outer case 16 is a bottomed cylindrical metal container having an opening on one side in the axial direction, and the opening of the outer case 16 is closed off by a sealing assembly 17. Hereinafter, for convenience of explanation, the sealing assembly 17 side of the battery is described as the top, and the bottom side of the outer case 16 is described as the bottom.

The positive electrode 11, the negative electrode 12, and the separator 13, which constitute the electrode assembly 14, are all elongated rectangular members, and are alternately laminated in the radial direction of the electrode assembly 14 by being spirally wound in the longitudinal direction. The separator 13 isolates the positive electrode 11 from the negative electrode 12. The two separators 13 are disposed to sandwich the positive electrode 11, for example. The electrode assembly 14 comprises a positive electrode lead 20 connected to the positive electrode 11 by means of welding or the like, and a negative electrode lead 21 connected to the negative electrode 12 by means of welding or the like. In the electrode assembly 14, the longitudinal direction of the positive electrode 11 and the negative electrode 12 corresponds to the winding direction, while the transverse direction of the positive electrode 11 and the negative electrode 12 corresponds to the axial direction. That is, end surfaces of the positive electrode 11 and the negative electrode 12 in the transverse direction form end surfaces of the electrode assembly 14 in the axial direction.

Insulating plates 18 and 19 are respectively arranged above and below the electrode assembly 14. In the example illustrated in FIG. 1, the positive electrode lead 20 extends through a through-hole in the insulating plate 18 to the side of the sealing assembly 17, and the negative electrode lead 21 extends outside the insulating plate 19 to the side of the bottom of the outer case 16. The positive electrode lead 20 is connected to the lower surface of an internal terminal plate 23 of the sealing assembly 17, by means of welding or the like, and a cap 27, the top plate of the sealing assembly 17 electrically connected to the internal terminal plate 23, serves as a positive electrode terminal. The negative electrode lead 21 is connected to the inner surface of the bottom of the outer case 16 by means of welding or the like, and the outer case 16 serves as a negative electrode terminal.

A gasket 28 is provided between the outer case 16 and the sealing assembly 17 to ensure that the interior of the battery is tightly sealed. The outer case 16 includes a grooved portion 22 formed to have a part of a side surface portion projected inward and support the sealing assembly 17. The grooved portion 22 is preferably annularly formed along the peripheral direction of the outer case 16, supporting the sealing assembly 17 by the upper surface thereof. The sealing assembly 17 is fixed to an upper part of the outer case 16 by means of the grooved portion 22 and an opening end portion of the outer case 16 which is crimped to the sealing assembly 17.

The sealing assembly 17 has a structure in which an internal terminal plate 23, a lower vent member 24, an insulating member 25, an upper vent member 26, and a cap 27 are layered in the order from the side of the electrode assembly 14. The members forming the sealing assembly 17 each have, for example, a disk shape or a ring shape, and the members except for the insulating member 25 are each electrically connected to one another. The lower vent member 24 and the upper vent member 26 are connected at each center part, and the insulating member 25 is interposed between the peripheral edges of the vent members. When the internal pressure of the battery rises due to abnormal heat generation, the lower vent member 24 deforms and breaks so as to push up the upper vent member 26 toward the side of the cap 27, and the current path between the lower vent member 24 and the upper vent member 26 is disconnected. When the internal pressure further increases, the upper vent member 26 breaks to emit gas from the opening portion of the cap 27.

Hereinafter, the positive electrode 11, the negative electrode 12, the separator 13, and the non-aqueous electrolyte, all of which constitute the non-aqueous electrolyte secondary battery 10, particularly, the positive electrode 11 will be described in detail.

[Positive Electrode]

The positive electrode 11, for example, has a positive electrode core and a positive electrode mixture layer formed on the surface of the positive electrode core. The positive electrode mixture layer is preferably formed on both the surfaces of the positive electrode core. As the positive electrode core, a foil of a metal that is stable in the potential range of the positive electrode 11, such as aluminum or an aluminum alloy, and a film with the metal disposed on the surface layer, or the like can be used. The thickness of the positive electrode core is, for example, greater than or equal to 10 μm and less than or equal to 30 μm.

The positive electrode mixture layer includes a positive electrode active material and an additive composed of a compound including at least one element selected from the group consisting of P, Ca, Sr, B, Zr, Er, Ti and Al. The thickness of the positive electrode mixture layer is greater than or equal to 10 μm and less than or equal to 150 μm, for example, on one side of the positive electrode core.

The positive electrode active material includes a lithium-containing transition metal composite oxide having a layered structure. The lithium-containing transition metal composite oxide includes secondary particles each formed by aggregation of primary particles. The particle diameter of the primary particles forming the secondary particles of the lithium-containing transition metal composite oxide is, for example, greater than or equal to 0.02 μm and less than or equal to 2 μm. The particle diameter of the primary particles is measured as the diameter of a circumscribed circle in particle images observed by scanning electron microscopy (SEM). The average particle diameter of the secondary particles of the lithium-containing transition metal composite oxide is, for example, greater than or equal to 2 μm and less than or equal to 30 μm. As used herein, the average particle diameter refers to the volume-based median diameter (D50). The D50 means the particle diameter at which the cumulative frequency in the volume-based particle size distribution reaches 50% from the smaller particle side, which is also referred to as the median diameter. The particle size distribution of the secondary particles of the lithium-containing transition metal composite oxide can be measured using a laser diffraction particle size distribution measuring device (e.g., MT3000II, manufactured by MicrotracBEL Corp.), with water used as the dispersion medium.

Examples of the layered structures of the lithium-containing transition metal composite oxide include a layered structure belonging to the space group R-3m and a layered structure belonging to the space group C2/m. From the viewpoint of high capacity, stability of the crystal structure, and the like, the lithium-containing transition metal composite oxide preferably has a layered structure belonging to the space group R-3m. The layered structure of the lithium-containing transition metal composite oxide may include a transition metal layer and a Li layer.

The lithium-containing transition metal composite oxide is represented by the general formula $Li_xNi_aCo_bMn_cM_dO_{2-y}$, wherein $0.8 < x < 1.20.75 \leq a \leq 0.95$, $0 \leq b \leq 0.15$, $0 \leq c \leq 0.25$, $0 \leq d \leq 0.10$, $0 \leq y < 0.05$, $a + b + c + d = 1$, and M represents at least one element selected from the group consisting of W, Mg, Mo, Nb, Ti, Si, Al, and Zr. The content ratio of elements constituting the lithium-containing transition metal composite oxide can be measured using an inductively coupled plasma atomic emission spectrometer (ICP-AES), an electron probe microanalyzer (EPMA), an energy dispersive X-ray spectrometer (EDX), or the like.

A high-capacity battery can be obtained by adjusting the content ratio of Ni in the lithium-containing transition metal composite oxide to greater than or equal to 75 mol% and less than or equal to 95 mol%. The higher the content ratio of Ni, the higher the capacity of the battery.

The content ratio of Co in the lithium-containing transition metal composite oxide is greater than or equal to 0 mol% and less than or equal to 15 mol%, and Co is an optional component. In other words, the lithium-containing transition metal composite oxide may not contain Co. The lithium-containing transition metal composite oxide may improve the heat resistance of the battery by containing Co.

The content ratio of Mn in the lithium-containing transition metal composite oxide is greater than or equal to 0 mol% and less than or equal to 25 mol%, and Mn is an optional component. In other words, the lithium-containing transition metal composite oxide may not contain Mn. The lithium-containing transition metal composite oxide may stabilize the crystal structure by containing Mn.

The content ratio of M (where M represents at least one element selected from the group consisting of W, Mg, Mo, Nb, Ti, Si, Al and Zr) in the lithium-containing transition metal composite oxide is greater than or equal to 0 mol% and less than or equal to 10 mol%, and M is an optional component. In other words, the lithium-containing transition metal composite oxide may be free of M.

A sulfonate compound represented by formula (I) is present on the surfaces of the secondary particles of the lithium-containing transition metal composite oxide:

[Formula 2]

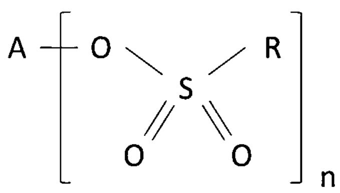

(I)

wherein A represents a group I or group II element, R represents a hydrocarbon group, and n represents 1 or 2. A preferably represents a group I element. Especially, Li or Na is more preferable, and Li is particularly preferable. The sulfonate compound may be present in a dotted distribution so as to cover at least part of the surfaces of the secondary particles of the lithium-containing transition metal composite oxide or to cover the entire surface of the secondary particles. The sulfonate compound may be present on the surfaces of the primary particles of the lithium-containing transition metal composite oxide.

In formula (I), R preferably represents an alkyl group. The number of carbon atoms in the alkyl group is preferably less than or equal to 5, and more preferably less than or equal to 3. From the viewpoint of reducing the reaction resistance and the like, a preferred example of R is an alkyl group having less than or equal to 3 carbon atoms, and especially, preferably represents a methyl group. Note that a part of carbon-bonded hydrogens in R may be substituted with fluorine. In addition, n in formula (I) is preferably 1.

Specific examples of the sulfonate compound include lithium methanesulfonate, lithium ethanesulfonate, lithium propanesulfonate, sodium methanesulfonate, sodium ethanesulfonate, magnesium methanesulfonate, and lithium fluoromethanesulfonate. Especially, at least one selected from the group consisting of lithium methanesulfonate, lithium ethanesulfonate, and sodium methanesulfonate is preferable, and lithium methanesulfonate is particularly preferable.

Since the sulfonate compound reduces the reaction resistance in the positive electrode 11, a reduction in the reaction resistance of the battery can be achieved. The sulfonate compound exerts the effect even in an extremely small amount but is preferably present on the surfaces of the secondary particles of the lithium-containing transition metal composite oxide in an amount of greater than or equal to 0.05 mass% relative to the mass of the composite oxide and more preferably in an amount of greater than or equal to 0.1 mass%. Although not particularly limited, the upper limit of the content ratio of the sulfonate compound is preferably 1.5 mass% relative to the mass of the lithium-containing transition metal composite oxide from the viewpoint of cycle characteristics. Thus, one example of a preferred range for the amount of the sulfonate compound is greater than or equal to 0.05 mass% and less than or equal to 1.5 mass% relative to the mass of the lithium-containing transition metal composite oxide.

The presence of the sulfonate compound on the surfaces of the secondary particles of the lithium-containing transition metal composite oxide can be confirmed by Fourier transform infrared spectroscopy (FT-IR). In an infrared absorption spectrum obtained by FT-IR, the positive electrode active material including lithium methanesulfonate, for example, have absorption peaks near 1238 $cm^{-1}$, 1175 $cm^{-1}$, 1065 $cm^{-1}$, and 785 $cm^{-1}$. The peaks near 1238 $cm^{-1}$, 1175 $cm^{-1}$, and 1065 $cm^{-1}$ are peaks caused by SO stretching vibration derived from lithium methanesulfonate. The peak near 785 $cm^{-1}$ is an peak caused by CS stretching vibration derived from lithium methanesulfonate. Note that the presence of a positive electrode active material including a sulfonate compound other than lithium methanesulfonate can be confirmed from the absorption peak derived from the sulfonate compound in the infrared absorption spectrum.

The presence of the sulfonate compound can also be confirmed by X-ray photoelectron spectroscopy (XPS). In the spectrum obtained by XPS, the positive electrode active material including lithium methanesulfonate exhibits a peak with a binding energy in the vicinity of 165 eV to 170 eV and an intensity (c/s) of 200 to 1000. The presence of the sulfonate compound on the surfaces of the secondary particles of the lithium-containing transition metal composite oxide can be confirmed by ICP, atomic absorption spectrometry, radiation XRD measurement, TOF-SIMS, or the like.

The positive electrode active material as an example of an embodiment can be produced by the method described below. Note that the production method described herein is merely an example, and the production method of the positive electrode active material is not limited to this method.

The production process of the positive electrode active material includes a synthesis step of obtaining a lithium-containing transition metal composite oxide, a washing step of washing the lithium-containing transition metal composite oxide obtained the synthesis step with water and dehydrating the washed product to obtain a cake-like composition, an addition step of adding at least one of the group consisting of a sulfonate compound and a sulfonic acid solution to the cake-like composition, and a drying step of drying the cake-like composition to obtain a powder-like composition.

In the synthesis step, for example, a metal oxide containing greater than or equal to 75 mol% and less than or equal to 95 mol% of Ni, greater than or equal to 0 mol% and less than or equal to 15 mol% of Co, greater than or equal to 0 mol% and less than or equal to 25 mol% of Mn, and greater than or equal to 0 mol% and less than or equal to 10 mol% of M (where M represents at least one element selected from W, Mg, Mo, Nb, Ti, Si, Al, and Zr) and a Li compound are mixed to obtain a mixture.

The metal oxide can be obtained, for example, by adding an alkaline solution such as sodium hydroxide dropwise while stirring a solution of a metal salt including Ni and an arbitrary metal element (Co, Mn, M etc.), adjusting the pH to the alkaline side (e.g., greater than or equal to 8.5 and less than or equal to 12.5), thereby precipitating (coprecipitating) a composite hydroxide including Ni and an arbitrary metal element, and heat-treating the composite hydroxide. The heat treatment temperature is not particularly limited, but is in the range of, for example, greater than or equal to 250°C and less than or equal to 600°C.

Examples of the Li compounds include $Li_2O_3$, LiOH, $Li_2O_2$, $Li_2O$, $LiNO_3$, $LiNO_2$, $Li_2SO_4$, $LiOH \cdot H_2O$, LiH, and LiF. The mixing ratio of the metal oxide and the Li compound is preferably such that the molar ratio between the total amount of metal elements in the metal oxide and Li is in the range of greater than or equal to 1:0.8 and less than or equal to 1:1.2, and more preferably is in the range of greater than or equal to 1.0 and less than or equal to 1.1, from the viewpoint of facilitating the adjustment of the parameters to the defined ranges.

Next, the synthesis step includes a firing step of firing the obtained mixture. The firing step is, for example, a multi-stage firing step including at least a first firing step of firing the mixture at greater than or equal to 300°C and less than or equal to 680°C in an oxygen stream and a second firing step of firing a fired product obtained in the first firing step at a

temperature exceeding 680°C in an oxygen stream. In the first firing step, the temperature is increased to a first set temperature of less than or equal to 680°C at a first temperature rising rate of greater than or equal to 0.2°C/min and less than or equal to 4.5°C/min. In the second firing step, the temperature is increased to a second set temperature of less than or equal to 900°C at a temperature rising rate of greater than or equal to 0.5°C/min and less than or equal to 3.5°C/min. Note that a plurality of first and second temperature rising rates may be set for each temperature region as long as the first and second temperature rising rates are within the above-defined ranges.

The holding time of the first set temperature in the first firing step is preferably less than or equal to 5 hours, and more preferably less than or equal to 3 hours. The holding time of the first set temperature refers to the duration during which the first set temperature is maintained after reaching the first set temperature, and the holding time may be zero. The holding time of the second set temperature in the second firing step is preferably greater than or equal to 1 hour and less than or equal to 10 hours, and more preferably greater than or equal to 1 hour and less than or equal to 5 hours. The holding time of the second set temperature refers to the duration during which the second set temperature is maintained after reaching the second set temperature. The firing of the mixture is performed, for example, in an oxygen stream with an oxygen concentration of greater than or equal to 60%, and the flow rate of the oxygen stream is greater than or equal to 0.2 mL/min and less than or equal to 4 mL/min per 10 $cm^3$ of the firing furnace or greater than or equal to 0.3 L/min per 1 kg of the mixture.

The synthesis step is not limited to the above-described step, and may include, for example, a known synthesis method of obtaining a lithium-containing transition metal composite oxide by mixing a precursor obtained by co-precipitating or mixing compounds such as a hydroxide, an oxide, and a carbonate compound including at least one selected from the group consisting of Ni, Co, Mn, and M (where M represents at least one element selected from W, Mg, Mo, Nb, Ti, Si, Al, and Zr) with a Li source and firing the mixture. In the case where the precursor does not include compounds such as M, these compounds such as M may be mixed and fired when the precursor and the Li source are mixed and fired. These compounds may also be pulverized to appropriately adjust the particle shape or particle diameter or may be used after adjusting the water content, including hydrates.

In the washing step, the lithium-containing transition metal composite oxide is washed with water and dehydrated to obtain a cake-like composition. The lithium-containing transition metal composite oxide may be in particulate form as obtained from the synthesis step. Through washing, unreacted portions of the lithium compound added in the synthesis step, as well as impurities other than the lithium compound, can be removed. During water washing, for example, greater than or equal to 300 g and less than or equal to 5000 g of lithium-containing transition metal composite oxide may be charged per 1 L of water. Note that the water washing may be repeated a plurality of times, and the dehydration after the water washing can be performed by, for example, a filter press.

In the addition step, at least one of the group consisting of a sulfonate compound and a sulfonic acid solution is added to the cake-like composition obtained in the washing step. Accordingly, the sulfonate compound can be adhered to the surface of the lithium-containing transition metal composite oxide. The sulfonate compound may be in the form of powder or solution. The sulfonic acid solution is, for example, a methanesulfonic acid solution obtained by dissolving methanesulfonic acid in water. The Li compound remains in the cake-like composition, and the remaining Li compound is dissolved in water contained in the cake-like composition, whereby the sulfonate compound including Li is formed even when the sulfonic acid solution is added. From the viewpoint of enhancing the effects of the present disclosure, a lithium compound or a lithium compound solution may be added to the cake-like composition together with the sulfonic acid solution. Alternatively, a mixed solution prepared in advance by mixing the sulfonic acid solution with the lithium compound or lithium compound solution may be added to the cake-like composition. The lithium compound may be, for example, LiOH, and the lithium compound solution may be, for example, an LiOH solution obtained by dissolving LiOH in water. The amounts of the lithium compound and the sulfonic acid solution added to the cake-like composition preferably satisfy the relation $0 \leq$ Li compound/sulfonic acid $\leq 1.3$ in terms of molar ratio. The amount of the sulfonate compound or sulfonic acid added is preferably greater than or equal to 0.05 mass% and less than or equal to 1.5 mass%, and more preferably greater than or equal to 0.1 mass% and less than or equal to 1.0 mass% relative to the mass of the lithium-containing transition metal composite oxide. The concentrations of the sulfonic acid solution and the sulfonate compound solution are each, for example, greater than or equal to 0.5 mass% and less than or equal to 40 mass%.

In the drying step, the cake-like composition obtained in the washing step is dried to obtain a powder-like composition. The drying step may be performed under a vacuum atmosphere. The drying conditions are, for example, greater than or equal to 150°C and less than or equal to 400°C for greater than or equal to 0.5 hours and less than or equal to 15 hours.

The additive included in the positive electrode mixture layer includes a compound including at least one element selected from the group consisting of P, Ca, Sr, B, Zr, Er, Ti and Al. The additive is present, for example, in the form of particles in the gaps between the particles of the positive electrode active material. Since the additive easily reacts with hydrogen fluoride, the additive preferentially reacts with hydrogen fluoride generated by decomposition of the non-aqueous electrolyte. As a result, the lithium-containing transition metal composite oxide can be protected from hydrogen fluoride.

The additive is, for example, a compound including at least one of the group consisting of a phosphate, a sulfate, an oxide, a hydroxide, and a chloride including at least one element selected from the group consisting of P, Ca, Sr, B, Zr, Er and Al. Examples of the additive include $Li_3PO_4$, CaO, $CaCl_2$, $Ca(OH)_2$, SrO, $SrCl_2$, $Sr(OH)_2$, $B_2O_3$, $B(OH)_3$, $ZrSO_4$, $ZrO_2$, $ZrF_4$, $Er_2(SO_4)_3$, $TiO_2$, $Ti(OH)_4$, $Al_2O_3$, $Al(OH)_3$, $AlPO_4$, and $AlF_3$. Note that the additives may be used singly or in combination of two or more thereof. These compounds may also be pulverized to appropriately adjust the particle shape or particle diameter or may be used after adjusting the water content, including hydrates.

The amount of P, Ca, Sr, B, Zr, Er, Ti, and Al included in the additive in the positive electrode mixture layer is preferably greater than or equal to 0.001 mass% and less than or equal to 1 mass%, and more preferably greater than or equal to 0.01 mass% and less than or equal to 1 mass% relative to the total mass of the positive electrode active material. In this case, the effects of the present disclosure are more remarkably exhibited. Note that in the case of using a plurality of additives, the total amount of P, Ca, Sr, B, Zr, Er, Ti, and Al included in all the additives preferably falls within the above range. The content of the additive may be different in the thickness direction of the positive electrode mixture layer, but is preferably approximately the same over the thickness direction of the positive electrode mixture layer.

The presence of the additives can be confirmed by synchrotron XRD measurement, X-ray photoelectron spectroscopy (XPS), time-of-flight secondary ion mass spectrometry (TOF-SIMS), and the like.

The positive electrode mixture layer includes, in addition to a positive electrode active material and an additive, for example, a conductive agent and a binder. Examples of the conductive agent included in the positive electrode mixture layer include carbon-based particles such as carbon black (CB) including acetylene black (AB) and Ketjenblack, Ketjenblack, carbon nanotubes (CNT), graphene, and graphite. These materials may be used singly or in combination of two or more thereof.

Examples of the binder included in the positive electrode mixture layer include fluorine-based resins such as polytetrafluoroethylene (PTFE) and polyvinylidene fluoride (PVDF), polyimide-based resins, acrylic-based resins, polyolefin-based resins, and polyacrylonitrile (PAN). These binders may be used singly or in combination of two or more thereof.

The positive electrode 11 an example of an embodiment can be produced, for example, through a production step of producing a positive electrode active material, a preparation step of preparing a positive electrode slurry including the positive electrode active material, a conductive agent, and a binder, an application step of applying the positive electrode slurry on the surface of a positive electrode core, followed by drying, and a rolling step of rolling the coating produced in the application step. Here, an additive is added in the preparation step, thereby making it possible to disperse the additive in the positive electrode mixture layer.

[Negative Electrode]

The negative electrode 12 may have, for example, a negative electrode core and a negative electrode mixture layer formed on the surface of the negative electrode core, or a metal Li foil may be used as the negative electrode 12. The negative electrode 12 may have a negative electrode core, and lithium metal may be deposited on the surface of the negative electrode core by charging. When the negative electrode 12 has a negative electrode mixture layer, the negative electrode mixture layer is preferably formed on both the surfaces of the negative electrode core. As the negative electrode core, a metal foil that is stable in the potential range of the negative electrode 12, such as copper or a copper alloy, or a film with the metal disposed on a surface layer may be used. The thickness of the negative electrode core is, for example, greater than or equal to 5 $\mu$m and less than or equal to 30 $\mu$m. The negative electrode mixture layer includes, for example, a negative electrode active material and a binder. The thickness of the negative electrode mixture layer is, for example, greater than or equal to 10 $\mu$m and less than or equal to 150 $\mu$m on one side of the negative electrode core. The negative electrode 12 can be produced, for example, by coating a negative electrode mixture slurry including a negative electrode active material and a binder on the surface of the negative electrode core, drying the coating, and rolling the dried coating to form the negative electrode mixture layer on both the surfaces of the negative electrode core.

As the negative electrode active material included in the negative electrode mixture layer, any material capable of reversibly intercalating and releasing lithium ions may be used without particular limitation, and generally, carbon materials such as graphite are used. The graphite may be natural graphite, such as flake graphite, lump graphite, or earthy graphite, or artificial graphite, such as lump artificial graphite or graphitized mesophase carbon microbeads. In addition, as the negative electrode active material, metals that alloy with Li, such as Si and Sn, metal compounds including Si, Sn, or the like, or lithium titanium composite oxides may be used. Furthermore, materials provided with a carbon coating on these may also be used. For example, Si-containing compounds represented by $SiO_x$ ($0.5 \leq x \leq 1.6$) or Si-containing compounds in which fine Si particles are dispersed in a lithium silicate phase represented by $Li_{2y}SiO_{(2+y)}$ ($0 < y < 2$), may be used in combination with graphite.

Examples of the binder included in the negative electrode mixture layer include styrene-butadiene rubber (SBR), nitrile-butadiene rubber (NBR), carboxymethyl cellulose (CMC) or salts thereof, polyacrylic acid (PAA) or a salt thereof (such as PAA-Na, PAA-K, or partially neutralized salts), and polyvinyl alcohol (PVA). These may be used singly or in

combination with two or more kinds thereof.

[Separator]

As the separator 13, a porous sheet having ion permeability and insulation properties may be used. Specific examples of the porous sheet include microporous films, woven fabrics, and nonwoven fabrics. Suitable materials for the separator 13 include polyolefins such as polyethylene and polypropylene, and cellulose. The separator 13 may have a single-layer structure or a multilayer structure. Further, a heat-resistant resin layer such as an aramid resin layer may be formed on the surface of the separator 13.
A filler layer including an inorganic filler may be formed at the interface between the separator 13 and at least one of the group consisting of the positive electrode 11 and the negative electrode 12. Examples of the inorganic filler include oxides containing metal elements such as Ti, Al, Si, and Mg, and phosphate compounds. The filler layer can be formed by applying a slurry containing the filler to the surface of the positive electrode 11, the negative electrode 12, or the separator 13.

[Non-Aqueous Electrolyte]

The non-aqueous electrolyte has ion conductivity (for example, lithium ion conductivity). The non-aqueous electrolyte may be a liquid electrolyte (electrolyte solution) or a solid electrolyte.
The liquid electrolyte (electrolyte solution) includes, for example, a non-aqueous solvent and an electrolyte salt dissolved therein. Examples of the non-aqueous solvent include esters, ethers, nitriles such as acetonitrile, amides such as dimethylformamide, and mixed solvents composed of two or more kinds thereof. The non-aqueous solvent may contain halogen-substituted products in which at least some of the hydrogen atoms in the solvent molecules are replaced with halogen atoms such as fluorine. Examples of the halogen-substituted products include fluorinated cyclic carbonate esters such as fluoroethylene carbonate (FEC), fluorinated linear carbonate esters, and fluorinated linear carboxylic acid esters such as methyl fluoro-propionate (FMP).
Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); and linear carboxylic acid esters such as methyl acetate, ethyl acetate, propyl acetate, methyl propionate (MP), and ethyl propionate (EP).
Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.
The electrolyte salt is preferably a lithium salt. Examples of lithium salts include $LiClO_4$, $LiBF_4$, $LiPF_6$, $LiAlC_4$, $LiSbF_6$, LiSCN, $LiCF_3SO_3$, $LiCF_3CO_2$, $LiAsF_6$, $LiB_{10}Cl_{10}$, lower aliphatic carboxylic acid lithium salts, LiCl, LiBr, LiI, phosphate salts, borate salts, and imide salts. Examples of phosphate salts include lithium difluorophosphate ($LiPO_2F_2$), lithium difluoro bis(oxalato)phosphate (LiDFBOP), and lithium tetrafluoro(oxalato)phosphate. Examples of borate salts include lithium bis(oxalato)borate (LiBOB) and lithium difluoro(oxalato)borate (LiDFOB). Examples of imide salts include lithium bis(fluorosulfonyl)imide ($LiN(FSO_2)_2$), lithium bis(trifluoromethanesulfonyl)imide ($LiN(CF_3SO_2)_2$), lithium trifluoromethanesulfonyl nonafluorobutanesulfonyl imide ($LiN(CF_3SO_2)(C_4F_9SO_2)$), and lithium bis(pentafluoroethanesulfonyl) imide ($LiN(C_2F_5SO_2)_2$). Among these, $LiPF_6$ is preferably used from the standpoint of ionic conductivity and electrochemical stability. The concentration of the lithium salt may be, for example, less than or equal to 4 mol per liter of non-aqueous solvent, preferably less than or equal to 3 mol, more preferably less than or equal to 1.8 mol, and even more preferably greater than or equal to 0.8 mol and less than or equal to 1.8 mol.
The non-aqueous electrolyte may include an additive. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.
Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more

kinds thereof. The unsaturated cyclic carbonate ester may have a portion of its hydrogen atoms substituted with fluorine atoms. The acid anhydride may be an anhydride formed by intermolecular condensation of multiple carboxylic acid molecules, but is preferably an acid anhydride of a polycarboxylic acid. Examples of polycarboxylic acid anhydrides include succinic anhydride, maleic anhydride, and phthalic anhydride.

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanatomethyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, for example, a solid or gel-type polymer electrolyte or an inorganic solid electrolyte may be used. As the inorganic solid electrolyte, materials known for use in all-solid-state lithium-ion secondary batteries, such as oxide-based solid electrolytes, sulfide-based solid electrolytes, and halide-based solid electrolytes, may be used. The polymer electrolyte includes, for example, a lithium salt and a matrix polymer, or a non-aqueous solvent, a lithium salt, and a matrix polymer. As the matrix polymer, polymer materials capable of absorbing the non-aqueous solvent and forming a gel may be used. Examples of the polymer materials include fluororesins, acrylic resins, and polyether resins.

## EXAMPLES

Hereinafter, the present disclosure will be described in more detail with reference to Examples and Comparative Examples, but the present disclosure is not limited to Examples below.

### <Example 1>

### [Production of Positive Electrode Active Material]

A composite hydroxide represented by $[Ni_{0.90}Co_{0.05}Al_{0.05}](OH)_2$ obtained by a coprecipitation method was fired at 500°C for 8 hours to obtain a metal oxide including Ni, Co, and Al. Then, lithium hydroxide monohydrate ($LiOH \cdot H_2O$) was mixed so that the molar ratio of Li to the total amount of Ni, Co, and Al was 1:1.03 to obtain a mixture. Then, the mixture was heated from room temperature to 650°C at a temperature rising rate of 2.0°C/min and then from 650°C to 740°C at a temperature rising rate of 0.5°C/min under an oxygen stream at an oxygen concentration of 95% (flow rate of 2 mL/min per 10 $cm^3$ and 5L/min per kg of mixture), and a lithium-containing transition metal composite oxide was obtained (synthesis step).

Water was added to the obtained lithium-containing transition metal composite oxide so that the slurry concentration was 1500 g/L, and the mixture was stirred for 15 minutes and filtered to obtain a cake-like composition (washing step). Then, powdered lithium methanesulfonate was added to the obtained cake-like composition (addition step). The amount of lithium methanesulfonate added was 0.3 mass% relative to the total mass of the lithium-containing transition metal composite oxide. The resulting cake-like composition was dried under a vacuum atmosphere at 180°C for 2 hours to obtain the positive electrode active material of Example 1 (drying step). Upon measurement of the produced positive electrode active material by Fourier transform infrared spectroscopy (FT-IR), the presence of lithium methanesulfonate was confirmed on the surfaces of the secondary particles of the lithium-containing transition metal composite oxide.

### [Production of Positive Electrode]

The positive electrode active material, acetylene black (AB), and polyvinylidene fluoride were mixed at a mass ratio of 86:10:4, and $TiO_2$ was added as an additive, and N-methyl-2-pyrrolidone (NMP) was used as a dispersion medium to prepare a positive electrode mixture slurry. Note that $TiO_2$ was added such that the mass of Ti was 0.08 mass% relative to the total mass of the positive electrode active material. Next, a positive electrode core made of aluminum foil was coated with the positive electrode mixture slurry, the coating was dried and compressed, and then the positive electrode core was cut into a predetermined electrode size to obtain a positive electrode in which a positive electrode mixture layer was disposed on both the surfaces of the positive electrode core. Note that an exposed portion, in which the surface of the positive electrode core was exposed, was provided in a part of the positive electrode.

[Preparation of Non-Aqueous Electrolyte]

Ethylene carbonate (EC), ethyl methyl carbonate (EMC), and dimethyl carbonate (DMC) were mixed at a volume ratio of 3:3:4. Lithium hexafluorophosphate ($LiPF_6$) was then dissolved in the resulting mixed solvent so that the concentration was 1.2 mol/L to prepare a non-aqueous electrolyte.

[Production of Test Cell]

A positive electrode lead was attached to the exposed portion of the positive electrode, a negative electrode lead was attached to lithium metal foil as a negative electrode, and the positive electrode and the negative electrode were spirally wound via a separator made of a polyolefin to produce a wound electrode assembly. This electrode assembly was housed in an outer case composed of an aluminum laminate sheet, the non-aqueous electrolyte was injected therein, and then an opening portion of the outer case was sealed to obtain a test cell.

[Evaluation of Reaction Resistance]

The test cell was charged at a constant current of 0.2 C under a temperature environment of 25°C until the battery voltage reached 4.4 V (vs. Li) and charged at a constant voltage of 4.4 V until the current value reached 0.02 C. After a pause of 1 hour, the test cell was discharged to 2.5 V at a constant current of 0.2 C, thereby completing the initial charge-discharge cycle. Then, after a pause of 2 hours under a temperature environment of 10°C, the cell was charged at a constant voltage of 4.4 V with a current value equivalent to 0.01 C using Solartron 1255B (manufactured by Solartron Corporation), the AC impedance of each cell was measured at an applied voltage of 10 mV and a measurement frequency range of greater than or equal to 0.01 and less than or equal to 200 kHz, and the value of the reaction resistance was obtained from the Nyquist plot (an arc of about greater than or equal to 1 Hz and less than or equal to 0.1 Hz).

[Evaluation of Cycle Characteristics]

The test cell was charged to 4.4 V (vsLi) at a constant current of 0.2 C under a temperature environment of 25°C and then charged at a constant voltage of 4.4 V until the current value was equivalent to 0.01 C. After a pause of 1 hour, the test cell was discharged to 2.5 V at a constant current of 0.2 C, which was defined as one cycle, and the discharge capacity at 0.2 C after 30 cycles was measured. The capacity retention rate was determined using the following equation.

Capacity retention rate = discharge capacity after 30 cycles/discharge capacity at 1st cycle

<Examples 2 to 9>

A test cell was produced and evaluated in the same manner as in Example 1, except that the composition of the additives was changed as listed in Table 1 in the production of the positive electrode. Note that the additives were added such that the mass of the elements listed in Table 1 was the addition amount described in Table 1 relative to the total mass of the positive electrode active material.

<Comparative Example 1>

A test cell was produced and evaluated in the same manner as in Example 1 except that lithium methanesulfonate was not added in the addition step of producing the positive electrode active material, and the additive was not added in the production of the positive electrode.

<Comparative Example 2>

A test cell was produced and evaluated in the same manner as in Example 1, except that the additive was not added in the production of the positive electrode.

<Comparative Example 3>

A test cell was produced and evaluated in the same manner as in Example 1, except that lithium methanesulfonate was not added in the addition step of producing the positive electrode active material.

<Comparative Example 4>

A test cell was produced and evaluated in the same manner as in Example 1, except that in the addition step of producing the positive electrode active material, a 10 mass% lithium succinate solution was added instead of lithium methanesulfonate, and the amount of lithium succinate added relative to the total mass of the lithium-containing transition metal composite oxide was adjusted to 0.5 mass%.

The reaction resistance and the capacity retention rate of the test cells in Examples and Comparative Examples are shown in Table 1. In addition, Table 1 shows the compositions of the lithium-containing transition metal composite oxides together with the compositions and addition amounts of the sulfonate compound and the additive added. The reaction resistance and capacity retention rate of the test cells in Examples 1 to 9 and Comparative Examples 1 to 4 shown in Table 1 were each expressed relatively, taking the reaction resistance and capacity retention rate of the test cell in Comparative Example 1 as 100. A smaller value of the reaction resistance means that the reaction resistance is reduced, and a larger value of the capacity retention rate means better cycle characteristics.

[Table 1]

| | Lithium-containing transition metal composite oxide | | | Sulfonate compound | | Additive | | | Evaluation result | |
|---|---|---|---|---|---|---|---|---|---|---|
| | Composition [mol%] | | | Type | Addition Amount [mass%] | Element | Addition Amount [mass%] | Chemical formula | Reaction Resistance (relative value) | Capacity Retention Rate (relative value) |
| | Ni | Co | Al | | | | | | | |
| Example 1 | 90 | 5 | 5 | Li methanesulfonate | 0.3 | Ti | 0.08 | $TiO_2$ | 77 | 102 |
| Example 2 | 90 | 5 | 5 | Li methanesulfonate | 0.3 | Al | 0.1 | $Al_2O_3$ | 78 | 102 |
| Example 3 | 90 | 5 | 5 | Li methanesulfonate | 0.3 | Al | 0.08 | $Al_2(OH)_3$ | 75 | 102 |
| Example 4 | 90 | 5 | 5 | Li methanesulfonate | 0.3 | Al | 0.12 | $Al(PO_4)$ | 77 | 101.5 |
| Example 5 | 90 | 5 | 5 | Li methanesulfonate | 0.3 | Al | 0.08 | $Al_2F_3$ | 79 | 102 |
| Example 6 | 90 | 5 | 5 | Li methanesulfonate | 0.3 | Zr | 0.12 | $ZrSO_4$ | 77 | 101.5 |
| Example 7 | 90 | 5 | 5 | Li methanesulfonate | 0.3 | P | 0.08 | $Li_3PO_4$ | 79 | 102 |
| Example 8 | 90 | 5 | 5 | Li methanesulfonate | 0.3 | P | 0.3 | $B(OH)_3$ | 78 | 102 |
| Example 9 | 90 | 5 | 5 | Li methanesulfonate | 0.3 | Ca | 0.02 | CaCl, | 77 | 101.6 |
| Comparative Example 1 | 90 | 5 | 5 | - | - | - | - | - | 100 | 100 |
| Comparative Example 2 | 90 | 5 | 5 | Li methanesulfonate | 0.3 | - | - | - | 70 | 85 |
| Comparative Example 3 | 90 | 5 | 5 | - | - | Ti | 0.08 | $TiO_2$ | 105 | 103 |
| Comparative Example 4 | 90 | 5 | 5 | Li succinate | 0.3 | Ti | 0.08 | $TiO_2$ | 104 | 102 |

As shown In Table 1, the test cells in Examples exhibited improved cycle characteristics while achieving a reduction in reaction resistance as compared with the test cells in Comparative Examples. On the other hand, the test cell of Comparative Example 2, in which the sulfonate compound was present on the surfaces of the secondary particles and no additives were added, showed reduced reaction resistance as compared with the test cell of Comparative Example 1, but had deteriorated cycle characteristics. The test cell of Comparative Example 3, in which the sulfonate compound was not present on the surfaces of the secondary particles and additives were added, showed improved cycle characteristics as compared with the test cell of Comparative Example 1, but had increased reaction resistance. In the test cell of Comparative Example 4, in which lithium succinate was present on the surfaces of the secondary particles instead of the sulfonate compound, showed increased reaction resistance as compared with the test cell of Comparative Example 1. That is, even if compounds other than the sulfonate compound were present on the surfaces of the secondary particles, the effects of the present disclosure could not be obtained.

The present disclosure will be further described with reference to embodiments below.

Constitution 1: A positive electrode for a non-aqueous electrolyte secondary battery, having:

a positive electrode core; and
a positive electrode mixture layer formed on a surface of the positive electrode core, wherein
the positive electrode mixture layer includes a positive electrode active material and an additive,
the positive electrode active material includes a lithium-containing transition metal composite oxide having a layered structure,
the lithium-containing transition metal composite oxide is represented by the general formula $Li_xNi_aCo_bMn_cM_dO_{2-y}$, wherein $0.8 < x < 1.2$, $0.75 \leq a \leq 0.95$, $0 \leq b \leq 0.15$, $0 \leq c \leq 0.25$, $0 \leq d \leq 0.10$, $0 \leq y < 0.05$, $a + b + c + d = 1$, and M represents at least one element selected from the group consisting of W, Mg, Mo, Nb, Ti, Si, Al, and Zr, and is composed of secondary particles each formed by aggregation of primary particles,
a sulfonate compound represented by formula (I) is present on surfaces of the secondary particles, and
the additive includes a compound including at least one element selected from the group consisting of P, Ca, Sr, B, Zr, Er, Ti, and Al,

[Formula 3]

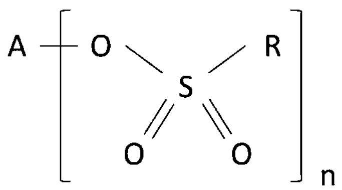

(I)

wherein A represents a group I or group II element, R represents a hydrocarbon group, and n represents 1 or 2.

Constitution 2: The positive electrode for a non-aqueous electrolyte secondary battery according to Constitution 1, wherein A represents a group I element.

Constitution 3: The positive electrode for a non-aqueous electrolyte secondary battery according to Constitution 1 or 2, wherein A represents Li.

Constitution 4: The positive electrode for a non-aqueous electrolyte secondary battery according to any one of Constitutions 1 to 3, wherein R represents an alkyl group.

Constitution 5: The positive electrode for a non-aqueous electrolyte secondary battery according to any one of Constitutions 1 to 4, wherein R represents a methyl group.

Constitution 6: The positive electrode for a non-aqueous electrolyte secondary battery according to any one of Constitutions 1 to 5, wherein an amount of the sulfonate compound present on a surface of the lithium-containing transition metal composite oxide is greater than or equal to 0.05 mass% and less than or equal to 1.5 mass% relative to a mass of the lithium-containing transition metal composite oxide in the positive electrode active material.

Constitution 7: The positive electrode for a non-aqueous electrolyte secondary battery according to any one of Constitutions 1 to 6, wherein an amount of P, Ca, Sr, B, Zr, Er, Ti, and Al included in the additive is greater than or equal to 0.001 mass% and less than or equal to 1 mass% relative to a total mass of the positive electrode active material in the positive electrode mixture layer.

Constitution 8: A non-aqueous electrolyte secondary battery comprising:

the positive electrode for a non-aqueous electrolyte secondary battery according to any one of Constitutions 1 to 7;

and
a negative electrode; and
a non-aqueous electrolyte.

REFERENCE SIGNS LIST

10 Non-aqueous electrolyte secondary battery, 11 Positive electrode, 12 Negative electrode, 13 Separator, 14 Electrode assembly, 16 Outer case, 17 Sealing assembly, 18, 19 Insulating plate, 20 Positive lead, 21 Negative lead, 22 Grooved portion, 23 Internal terminal plate, 24 Lower vent member, 25 Insulating member, 26 Upper vent member, 27 Cap, 28 Gasket

## Claims

1. A positive electrode for a non-aqueous electrolyte secondary battery, having:

a positive electrode core; and
a positive electrode mixture layer formed on a surface of the positive electrode core, wherein
the positive electrode mixture layer includes a positive electrode active material and an additive,
the positive electrode active material includes a lithium-containing transition metal composite oxide having a layered structure,
the lithium-containing transition metal composite oxide is represented by the general formula $Li_xNi_aCo_bMn_cM_dO_{2-y}$, wherein $0.8 < x < 1.2$, $0.75 \leq a \leq 0.95$, $0 \leq b \leq 0.15$, $0 \leq c \leq 0.25$, $0 \leq d \leq 0.10$, $0 \leq y < 0.05$, $a + b + c + d = 1$, and M represents at least one element selected from the group consisting of W, Mg, Mo, Nb, Ti, Si, Al, and Zr, and is composed of secondary particles each formed by aggregation of primary particles,
a sulfonate compound represented by formula (I) is present on surfaces of the secondary particles, and
the additive includes a compound including at least one element selected from the group consisting of P, Ca, Sr, B, Zr, Er, Ti, and Al,

[Formula 1]

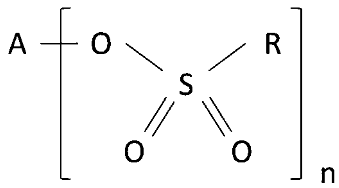

(I)

wherein A represents a group I or group II element, R represents a hydrocarbon group, and n represents 1 or 2.

2. The positive electrode for a non-aqueous electrolyte secondary battery according to claim 1, wherein A represents a group I element.

3. The positive electrode for a non-aqueous electrolyte secondary battery according to claim 1, wherein the A is Li.

4. The positive electrode for a non-aqueous electrolyte secondary battery according to claim 1, wherein R represents an alkyl group.

5. The positive electrode for a non-aqueous electrolyte secondary battery according to claim 1, wherein R represents a methyl group.

6. The positive electrode for a non-aqueous electrolyte secondary battery according to claim 1, wherein an amount of the sulfonate compound present on a surface of the lithium-containing transition metal composite oxide is greater than or equal to 0.05 mass% and less than or equal to 1.5 mass% relative to a mass of the lithium-containing transition metal composite oxide in the positive electrode active material.

7. The positive electrode for a non-aqueous electrolyte secondary battery according to claim 1, wherein an amount of P,

Ca, Sr, B, Zr, Er, Ti, and Al included in the additive is greater than or equal to 0.001 mass% and less than or equal to 1 mass% relative to a total mass of the positive electrode active material in the positive electrode mixture layer.

**8.** A non-aqueous electrolyte secondary battery comprising:

the positive electrode for a non-aqueous electrolyte secondary battery according to any one of claims 1 to 7; and
a negative electrode; and
a non-aqueous electrolyte.

Figure 1

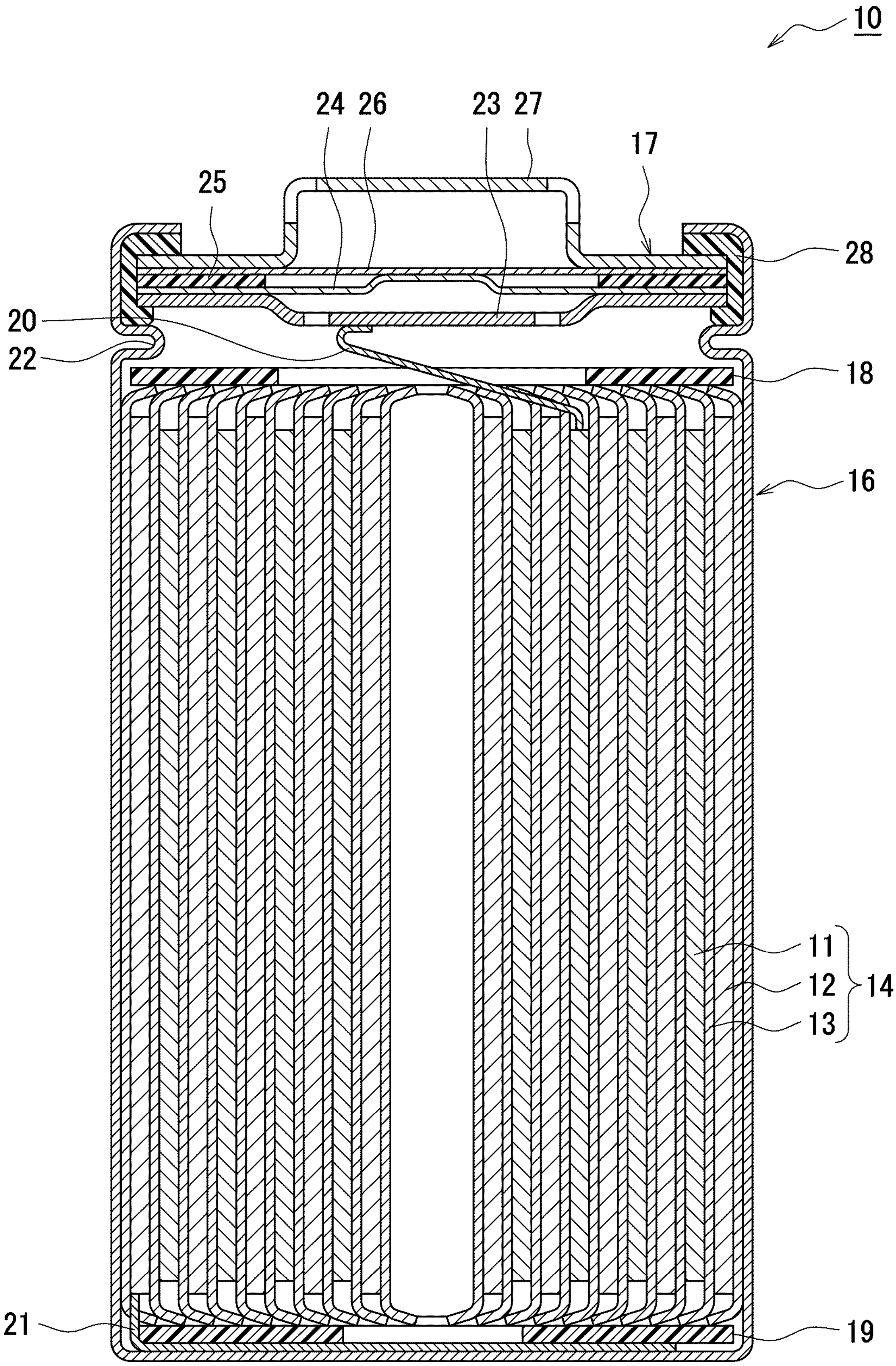

**INTERNATIONAL SEARCH REPORT**

International application No. **PCT/JP2024/013954**

**A. CLASSIFICATION OF SUBJECT MATTER**

***H01M 4/131***(2010.01)i; ***H01M 4/36***(2006.01)i; ***H01M 4/505***(2010.01)i; ***H01M 4/525***(2010.01)i; ***H01M 4/62***(2006.01)i
FI: H01M4/131; H01M4/36 C; H01M4/505; H01M4/525; H01M4/62 Z

According to International Patent Classification (IPC) or to both national classification and IPC

**B. FIELDS SEARCHED**

Minimum documentation searched (classification system followed by classification symbols)

H01M4/131; H01M4/36; H01M4/505; H01M4/525; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-169286 A (TDK CORPORATION) 03 October 2019 (2019-10-03) paragraphs [0007], [0019]-[0021], [0037], [0098]-[0099], [0114], examples 1, 15-16, fig. 3, table 3 | 1-6, 8 |
| A | | 7 |
| A | CN 113564708 A (SHANGHAI HUAYI (GROUP) CO., LTD.) 29 October 2021 (2021-10-29) paragraph [0054], example 7 | 7 |
| A | JP 2018-006164 A (UBE INDUSTRIES, LTD.) 11 January 2018 (2018-01-11) example 1 | 7 |
| A | JP 2003-173782 A (MITSUBISHI CHEMICAL CORPORATION) 20 June 2003 (2003-06-20) example 1 | 7 |
| P, X | WO 2023/100535 A1 (PANASONIC INTELLECTUAL PROPERTY MANAGEMENT CO., LTD.) 08 June 2023 (2023-06-08) claims, paragraph [0042] | 1-8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/013954**

C. DOCUMENTS CONSIDERED TO BE RELEVANT

| Category* | Citation of document, with indication, where appropriate, of the relevant passages | Relevant to claim No. |
|---|---|---|
| P, X | WO 2023/100532 A1 (PANASONIC INTELLECTUAL PROPERTY MANAGEMENT CO., LTD.) 08 June 2023 (2023-06-08) claims, paragraph [0055] | 1-8 |
| P, X | WO 2023/100531 A1 (PANASONIC INTELLECTUAL PROPERTY MANAGEMENT CO., LTD.) 08 June 2023 (2023-06-08) claims, paragraph [0055] | 1-8 |

Form PCT/ISA/210 (second sheet) (July 2022)

**INTERNATIONAL SEARCH REPORT**
**Information on patent family members**

International application No.
**PCT/JP2024/013954**

| Patent document cited in search report | Publication date (day/month/year) | Patent family member(s) | Publication date (day/month/year) |
|---|---|---|---|
| JP 2019-169286 A | 03 October 2019 | (Family: none) | |
| CN 113564708 A | 29 October 2021 | (Family: none) | |
| JP 2018-006164 A | 11 January 2018 | (Family: none) | |
| JP 2003-173782 A | 20 June 2003 | (Family: none) | |
| WO 2023/100535 A1 | 08 June 2023 | (Family: none) | |
| WO 2023/100532 A1 | 08 June 2023 | (Family: none) | |
| WO 2023/100531 A1 | 08 June 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022113728 A
- JP 2019169286 A